# EUROPÄISCHE PATENTSCHRIFT

(11) **EP 0 363 592 B1**
(45) Veröffentlichungstag und Bekanntmachung des Hinweises auf die Patenterteilung: **14.06.1995**
(21) Anmeldenummer: 89114546.8
(22) Anmeldetag: 07.08.1989
(51) Int. Cl.: B29C 51/42, B29C 51/02, B29C 51/36, B29L 31/58

(54) **Verfahren und Vorrichtung zur Herstellung von Formteilen oder Gegenständen unter Verwendung eines Extrusions-Giessverfahrens**
Method and apparatus for making shaped parts or objects using an extrusion casting method
Procédé et dispositif de fabrication de pièces ou objets moulés par une technique d'extrusion-formage

(30) Priorität: 11.10.1988 DE 3834637
(43) Veröffentlichungstag der Anmeldung: 18.04.1990
(73) Patentinhaber: ALKOR GMBH KUNSTSTOFFE, D-81451 München (DE)
(72) Erfinder: Landler, Josef, Chem.-Ing., D-8190 Wolfratshausen (DE)

(56) Entgegenhaltungen:
- EP-A- 0 045 972
- EP-A- 0 288 728
- EP-A- 0 288 733
- WO-A-85/02142
- DE-A- 2 022 465
- DE-U- 8 706 204
- FR-A- 2 218 982

## Beschreibung

Die vorliegende Erfindung betrifft ein Verfahren und eine Vorrichtung zur Herstellung von Formteilen oder Gegenständen unter Verwendung eines Extrusionsgießverfahrens, wobei das aus einem Breitschlitzextruder austretende schmelzenförmige ein- oder mehrschichtige Kunststoffextrudat in eine ständig während des Eingießens unter Vakuum stehende Form eingebracht wird, dabei die vorgelegte Form oder Formoberfläche annimmt, wobei der Breitschlitzextruder und/oder die Form in mindestens einer Richtung bewegt werden und die mittlere Dicke des Extrudates in der Negativ- oder Negativtiefziehform unter 7000 »m eingestellt wird. Gemäß der Erfindung wird ein Breitschlitzextruder verwendet, der hinsichtlich der ausgestoßenen Menge des Kunststoffextrudates diskontinuierlich oder intermittierend arbeitet, und durch Steuerung der ausgestoßene Menge des Kunststoffextrudates und unter Einhaltung bestimmter Verfahrensmerkmale gelingt es, Hinterschneidungen oder andere ungleichmäßig geformte Gegenstände oder Formteile annähernd gleichmäßig zu beschichten oder Materialanhäufungen an vorbestimmten Stellen zu vermeiden.

Aus der DE-OS 32 40 996 ist bereits ein Verfahren zur Herstellung von dickwandigen und vorwiegend großformatigen thermoplastischen Kunststoffteilen bekannt, bei dem der thermoplastische Kunststoff in einem Schmelzaggregat, Extruder oder Walzwerk aufgeschmolzen wird, die extrudierten Stränge drucklos in eine Form eingelegt werden und nachfolgend das Einstampfen der Formfüllung mit Hand erfolgt. Dieses Verfahren kann nicht im großtechnischen Maßstab angewendet werden und ist nicht zur Herstellung dünnwandiger Profile geeignet.

Aus dem Gebrauchsmustehr DE-U-8706204.6 ist ein Negativtiefziehverfahren bekannt, bei dem von festen Folien, Platten oder Bahnen ausgegangen wird, die aufgeheizt bzw. vorgeheizt, auf eine bestimmte Temperatur gebracht und durch einen Stempel oder eine ähnliche vorrichtung vorgeformt, wobei der Stempel schon die Form oder Formteilbereich der Negativtiefziehform aufweist. Dabei sind in der Negativtiefziehform Düsen oder Spritzen zum Einspritzen von Kühlflüssigkeit auf die Rückseite der verformten Folie angeordnet. Die nach dem Gebrauchsmuster DE-U-8706204.6 hergestellten Formkörper werden auch für Kraftfahrzeuginnenverkleidung benutzt.

Gemäß FR-A-2218982 wird innerhalb eines Extrusions-Gießverfahrens die aus dem Extruder austretende flüssige Kunststoffmasse in radähnlich angeordnete Gießformen gebracht, die mit gleichförmiger Geschwindigkeit bewegt werden, wobei der Gießvorgang gleichmäßig erfolgt.

Bei dem Verfahren gemäß FR-A-2218982 gelingt es zwar in einem gleichförmigen Verfahrensablauf einfache Hohlkörper herzustellen, schwierige Formteile oder Gegenstände mit Hinterschneidungen lassen sich jedoch nach diesem Verfahren nicht oder nur fehlerhaft herstellen.

Ziel und Aufgabe der vorliegenden Erfindung war es, ein verbessertes Extrusions-Gießverfahren und eine verbesserte Extrusions-Gießvorrichtung zu finden. Es sollten unter anderem Hinterschneidungen oder andere ungleichmäßig geformte Gegenstände oder Formteile annähernd gleichmäßig beschichtet werden können.

Erfindungsgemäß wurde festgestellt, daß diesen Aufgaben ein Verfahren zur Herstellung von Formteilen oder Gegenständen unter Verwendung eines Extrusionsgießverfahrens gerecht wird, wobei das aus einem Breitschlitzextruder austretende schmelzenförmige ein- oder mehrschichtige Kunststoffextrudat in eine ständig während des Eingießens unter Vakuum stehende Form eingebracht wird, dabei die vorgelegte Form oder Formoberfläche annimmt, wobei der Breitschlitzextruder und/oder die Form in mindestens einer Richtung bewegt werden und die mittlere Dicke des Extrudates in der Negativ- oder Negativtiefziehform unter 7000 »m eingestellt wird. Gemäß der Erfindung wird ein Breitschlitzextruder verwendet, der hinsichtlich der ausgestoßenen Menge des Kunststoffextrudates diskontinuierlich oder intermittierend arbeitet, wobei die ausgestoßene Menge des Kunststoffextrudates während der Zeit des Tiefziehvorganges auf Null oder eine geringere Ausstoßmenge eingestellt wird. Dabei findet eine Düse des Breitschlitzextruders Verwendung, die eine, während des Aufbringens der Schmelze verstell- und steuerbare Vorrichtung zur Einstellung der Distanz der Düsenlippen aufweist, wodurch Hinterschneidungen oder andere ungleichmäßig geformte Gegenstände oder Formteile annähernd gleichmäßig beschichtet oder Materialanhäufungen an vorbestimmten Stellen vermieden werden. Das Kunststoffextrudat wird in Form einer bahnenförmigen Schmelze auf einen allseitig umlaufenden porösen, luftdurchlässigen Rahmen oder Rand der Negativ- oder Negativtiefziehform aufgebracht und die Negativform oder Negativtiefziehform wird vor dem Eingießen auf eine Temperatur unter 373 K eingestellt. Das Extrudat nimmt die peröse, luftdurchlässige, genarbte, strukturierte, geformte und/oder mit Oberflächendekorationen versehene Form der Negativform oder Negativtiefziehform an und wird sofort um mehr als 80 K gekühlt oder schockgekühlt.

Nach einer bevorzugten Ausführungsform des erfindungsgemäßen Verfahrens wird somit während des Bewegungsvorganges des Breitschlitzextruders und/oder der Negativform oder der Negativtiefziehform eine unterschiedliche Dickenverteilung des Extrudates durch Steuerung der Distanz der Düsenlippen und/oder durch Steuerung der Schneckendrehzahl des Extruders und/oder durch eine Änderung der Bewegungsgeschwindigkeit der Negativform oder Negativtief ziehform und/oder des Extruders eingestellt.

Dadurch gelingt es unter anderem, Hinterschneidungen oder andere ungleichmäßig geformte Gegenstände oder Formteile annähernd gleichmäßig zu beschichten oder Materialanhäufungen an vorbestimmten Stellen zu vermeiden.

Nach einer anderen Ausführungsform werden zur Herstellung von dreidimensional geformten Kunststofformteilen oder Gegenständen der Extruder oder Breitschlitzextruder und/oder die Negativform, vorzugsweise die Negativtiefziehform, in mindestens einer Richtung bewegt, damit eine annähernd gleichmäßige Dickenverteilung des Extrudates auf der Negativform oder Negativtiefziehform erfolgt.

Nach einer zweckmäßigen Ausführungsform arbeitet der Extruder, vorzugsweise Breitschlitzextruder hinsichtlich der ausgestoßenen Menge des Kunststoffextrudates diskontinuierlich oder intermittierend, wobei die ausgestoßene Menge des Kunststoffextrudates, vorzugsweise während der Zeit des Tiefziehvorganges, auf Null oder auf geringere Ausstoßmenge eingestellt wird.

Nach einer bevorzugten Ausführungsform wird nach dem Eingießen des Extrudates in die Negativform oder Negativtiefziehform ein Träger, vorzugsweise ein positiv geformter Träger, auf die noch heiße eingegossene Schmelze von der nicht zu dekorierenden oder nicht zu prägenden Rückseite her aufgebracht und/oder es erfolgt durch Verwendung eines Druckes, vorzugsweise eines gleichmäßigen Druckes, auf die Trägerrückseite eine Verformung der Schmelzbahnrückseite unter Verbindung des Trägers.

Gemäß einer vorteilhaften Ausführungsform liegt das aus dem Extruder, vorzugsweise Breitschlitzextruder, austretende schmelzenförmige ein- oder mehrschichtige Kunststoffextrudat unmittelbar vor und/oder während der Verformung in der Negativform oder Negativtiefziehform im oder oberhalb der Fließtemperatur oder Fließtemperaturbereich, Kristallitschmelztemperatur oder Schmelztemperatur, wobei deren Verformungstemperatur 2 bis 80 K, vorzugsweise 5 bis 40 K, niedriger liegt als die Extrusionstemperatur.

Nach einer anderen Ausführungsform enthält die aus dem Extruder, vorzugsweise Breitschlitzextruder, austretende schmelzenförmige Bahn oder Kunststoffextrudat einen teilkristallinen Anteil im Thermoplasten, wobei die Temperatureinstellung unmittelbar vor der Verformung im Negativtiefziehwerkzeug, im oder oberhalb des Kristallitschmelzbereiches, vorzugsweise im thermoplastischen Bereich, erfolgt.

Nach einer zweckmäßigen Ausführungsform enthält die aus dem Extruder, vorzugsweise Breitschlitzextruder, austretende schmelzenförmige Bahn oder Kunststoffextrudat einen amorphen Anteil, wobei die Temperatureinstellung unmittelbr vor der Verformung im Negativtiefziehwerkzeug, vorzugsweise im oder oberhalb des Fließtemperaturbereiches oder im thermoplastischen Bereich erfolgt.

Nach einer bevorzugten Ausführungsform wird die Negativform oder Negativtiefziehform vor dem Eingießen auf eine Temperatur unter 333 K eingestellt, wobei das Kunststoffextrudat in Form einer bahnenförmigen Schmelze während und/oder bei der Berührung des Rahmens oder Randes und/oder allseitig umlaufenden Randes der porösen Formoberfläche der Negativform oder Negativtiefziehform auch vom allseitig umlaufenden Rand angesaugt wird und eine Schockkühlung um mehr als 140 K durchgeführt wird.

Nach einer anderen Ausführungsform weist der Träger auf seiner der Schmelzbahn zugewandten Fläche eine hitzeaktivierbare Klebeschicht auf.

Die Erfindung betrifft weiterhin eine Vorrichtung zur Herstellung von Formteilen oder Gegenständen nach dem Gießverfahren, bestehend aus mindestens einer Gießform und mindestens einen Breitschlitzextruder, wobei der Breitschlitzextruder und/oder die form in mindestens einer Richtung bewegbar angeordnet sind und die Form porös und luftdurchlässig ist. Gemäß der Erfindung besitzt die poröse oder mikroporöse Negativform oder Negativtiefziehform auch an dem allseitig umlaufenden Rand oder Rahmen eine poröse,
luftdurchlässige oder mikroporöse, luftdurchlässige Oberfläche und die Düse des Breitschlitzextruders weist eine während des Aufbringens der Schmelze verstell- und steuerbare Vorrichtung zur Einstellung der Distanz der Düsenlippen auf und/oder die Negativform oder Negativtiefziehform und/oder der Extruder sind mit einer steuerbaren Vorrichtung zur Einstellung der Bewegungsgeschwindigkeiten versehen.

Die poröse oder mikroporöse Negativform oder Negativtiefziehform ist somit an dem Rand oder Rahmen und/oder allseitig umlaufenden Rand der Formoberfläche mit einer porösen luftdurchlässigen, vorzugsweise mikroporösen luftdurchlässigen Oberfläche zur Anlegung eines Vakuums zur Abdichtung der Schmelzenbahn und/oder Überdruck zur Erzeugung von Blasluft zur Entformung versehen oder aufgebaut.

Die poröse oder mikroporöse Negativform oder Negativtiefziehform ist in der Nähe ihrer Formoberfläche mit eienr Kühlvorrichtung oder einem Kühlsystem versehen.

An der Negativform oder Negativtiefziehform ist mindestens eine Vorrichtung zur Anlegung eines Vakuums und/oder Überdruckes oder zur Erzeugung von Blasluft zur Entformung angeordnet.

Die Düse des Breitschlitzextruders weist nach einer bevorzugten Ausführungsform eine während des Aufbringens der Schmelze verstell- und steuerbare Vorrichtung zur Einstellung der Distanz der Düsenlippen auf.

Nach einer bevorzugten Ausführungsform sind die Negativform oder Negativtiefziehform und/oder der Extruder mit einer steuerbaren Vorrichtung zur Einstellung der Bewegungsgeschwindigkeit versehen.

Nach einer anderen Ausführungsform ist der Extruder mit einer Vorrichtung zur Steuerung der Schneckendrehzahl ausgestattet.

Die gemäß der Erfindung verwendete Negativtiefziehform ist vorzugsweise mit einer Abdichtvorrichtung für die Kunststoffolie, kunststoffhaltige Bahn oder Kunststoffplatte versehen, wobei die Negativtiefziehform mit mindestens einer Zuleitung und/oder Vorrichtung zur Ausübung eines Druckunterschiedes, vorzugsweise Vakuum und/oder Unterdruck, ausgestattet ist. Die Negativtiefziehform besitzt dabei eine poröse, luftdurchlässige, vorzugsweise mikroporöse luftdurchlässige, Formoberfläche, die eine metall-, metallegierungs-, mikrometallpartikelhaltige, keramikmetall- und/oder keramikmikrometallhaltige und/oder feinstteilige Füllstoffe enthaltende Schicht oder Oberfläche mit einer durchschnittlichen Partikeldicke unter 150 »m aufweist und die Negativtiefziehform in Kombination mit einer Zuleitungsvorrichtung und/oder Abzugsvorrichtung für die Kunststoffolie, -bahn oder -platte oder Transportvorrichtung für das hergestellte verformte Formteil oder den Gegenstand steht.

Der Negativtiefziehform ist als Gegenwerkzeug ein Stempel oder eine ähnliche Vorrichtung zuordnet. Der Stempel weist die Form oder Formteilbereiche der Negativtiefziehform (in Positivform) auf.

Die Negativtiefziehform enthält mindestens eine Oberflächenschicht als Formoberfläche, die aus einem Bindemittel, einem nicht wärmeleitenden oder schlecht wärmeleitenden anorganisch-chemischen feinteiligen Füllstoff, vorzugsweise Keramikpulver, mit einer mittleren Teilchengröße unter 80 »m, vorzugsweise unter 50 »m, sowie einen feinteiligen metall-, metallegierungs-, mikrometallpartikelhaltigen, keramikmetallpartikelhaltigen und/oder hitzebeständigen, feinteiligen Pulver oder pulverförmigen Gemisch mit einer durchschnittlichen Partikeldicke unter 80 »m, vorzugsweise unter 60 »m, besteht.

Das Gewichtsverhältnis des nicht wärmeleitenden oder schlecht wärmeleitenden anorganisch-chemischen Füllstoffes zu dem feinstteiligen Metallpulver, Metallegierungspulver, keramikmetall- oder mikrometallpartikelhaltigen Pulver beträgt 12 : 1 bis 1 : 12, vorzugsweise 5 : 1 bis 1 : 5 (in der Verformungsoberflächenschicht der Negativtiefziehform).

In der Oberflächenschicht sind nach einer bevorzugten Ausführungsform zusätzlich Fasern aus anorganisch-chemischem Material, vorzugsweise Glasfasern, enthalten.

Die mittlere Teilchengröße (bezogen auf die Formoberflächenschicht) des anorganisch-chemisch feinteiligen Füllstoffes zu dem feinteiligen Metallpulver steht im Verhältnis vom 3 : 1 bis 1 : 10, vorzugsweise 1 : 1 bis 1 : 3.

Nach einer anderen Ausführungsform sind die Metall- oder Keramikpartikel durch andere feuerfeste oder temperaturbeständige Partikel ganz oder teilweise ersetzt. Die Negativtiefziehform und der Stempel sind nach der Ausführungsform in einer mit Unterdruck oder mit Überdruck beschlagbaren Formkammer angeordnet.

Nach einer weiteren bevorzugten Ausführungsform sind mehrere Negativtiefziehformen hintereinander, nebeneinander oder karusellartig angeorndet. Als Kunststoffe können die an sich bekannten Thermoplasten und/oder Mischungen derselben, Elastomere und dergleichen verwendet werden. Das Extrudat gemäß der Erfindung ist ein- oder mehrschichtig (Extrudat oder Coextrudat).

Nach einer anderen bevorzugten Ausführungsform des erfindungsgemäßen Verfahrens wird ein einschichtiges Kunststoffextrudat oder ein zweischichtiges Kunststoffcoextrudat in Form einer bahnförmigen Schmelze, die vorzugsweise ohne zusätzliche Heizung unter Ausnutzung der Wärmekapazität der Schmelzenbahn auf einen Rand oder Rahmen der porösen Negativtiefziehform und/oder der Druck- oder Unterdruckkammern, in der die Negativtiefziehform angeordnet ist, aufgebracht und unter gleichmäßiger oder nahezu gleichmäßiger Bewegung des Breitschlitzextruders und/oder der Negativtiefziehform in mindestens einer Richtung geführt, wobei das Extrudat mindestens eine Negativtiefziehform auf ihrer Formfläche bis einschließlich zum Rand oder Rahmen abdeckt. Danach wird die extrudierte oder coextrudierte Bahn am Rand oder Rahmen vorzugsweise abgedichtet und gehalten und unter Verwendung eines Druckunterschiedes, vorzugsweise unter Verwendung eines von der Negativtiefziehform aus angelegten Unterdruckes, im Negativtiefziehverfahren verformt, wobei während des Tiefziehvorganges die ausgestoßene Menge des Kunststoffcoextrudates vorzugsweise auf Null eingestellt oder auf eine geringere Ausstoßmenge reduziert wird.

Nach einer anderen bevorzugten Ausführungsform des erfindungsgemäßen Verfahrens wird ein einschichtiges, vorzugsweise ein mindestens zweischichtiges Kunststoffextrudat in Form einer bahnförmigen Schmelze verwendet, die vorzugsweise ohne zusätzliche Heizung unter Ausnutzung der Wärmekapazität der Schmelzenbahn und einer Transportvorrichtung, vorzugsweise einer Transportkette, einer Transportkammer, einem Transportband und/oder einer Greifvorrichtung erfaßt und von dem Extruder beginnend über die Negativtiefziehform mit einer Geschwindigkeit in Abhängigkeit von der Ausstoßmenge und der Schmelzendicke so geführt wird, daß die Schmelzenbahn mindestens an den Rändern der Negativtiefziehform und/oder den Rändern oder Spannrahmen einer Druck- oder Unterdruckkammer, in der die Negativtiefziehform angeordnet ist, aufliegt und auf der Negativtiefziehformoberfläche angeordnet ist und gegebenenfalls mit mindestens einem Abdichtrahmen oder oberen Teil des Spannrahmens abgedichtet wird, sowie unter Verwendung eines Druckunterschiedes, vorzugsweise unter Verwendung eines von der Negativtiefziehform aus angelegten Unterdruckes, im Negativtiefziehverfahren verformt wird, wobei während des Tiefziehvorganges die ausgestoßene Menge des Kunststoffextrudates auf Null eingestellt oder auf eine geringere Ausstoßmenge reduziert wird.

Gemäß der Erfindung weist das verwendete Coextrudat eine durch die Negativtiefziehform zu prägende, zu dekorierende oder umzuformende Oberschicht auf, deren Fließtemperatur oder Fließtemperaturbereich, Kristallitschmelztemperatur oder -schmelzbereich um 3 bis 50 K niedriger ist als der Unterschicht und/oder bei der der Schmelzindex der Unterschicht oder Unterfolie (gemessen nach DIN 53735) MFI 170 °C/209 N/10 min. 1/50 bis 3/5 des Schmelzindex MFI 170 °C/209 N/10 min. der Oberschicht beträgt.

Nach einer bevorzugten Ausführungsform besteht das Extrudat aus einem Coextrudat, bei dem die Fließtemperatur oder der Fließtemperaturbereich, Kristallitschmelztemperatur oder -schmelzbereich der Oberschicht um 8 bis 40 K niedriger als die bzw. der der Unterschicht und/oder bei der der Schmelzindex (gemessen nach DIN 53735) MFI 170 °C/209 N/10 min. der Unterschicht oder Unterfolie 1/20 bis 1/2 des Schmelzindex MFI 170 °C/209 N/10 min. der Oberschicht oder Oberfolie beträgt.

Nach einer weiteren bevorzugten Ausführungsform besteht sowohl die Oberschicht als auch die Unterschicht oder Unterfolie aus einem Kunststoffgemisch oder einer Kunststofflegierung, die die gleichen Kunststoffe, jedoch in unterschiedlichen Gewichtskonzentrationen, bezogen auf die einzelnen Schichten oder Folien enthalten.

Nach einer weiteren bevorzugten Ausführungsform enthalten die Kunststoffmischung oder -legierung der Oberschicht und Unterschicht ein Polyolefin, vorzugsweise ein Propylenhomo-, -co-, -block- oder -pfropfpolymerisat oder ein Polyethylen hoher Dichte (Hartphase) und mindestens einen weiteren Thermoplasten oder ein thermoplastisches Elastomer mit einer niedrigen Fließtemperatur oder niedrigeren Fließtemperaturbereich, Kristallitschmelztemperatur oder Kristallitschmelztemperaturbereich oder einem höheren Schmelzindex (Weichphase) oder bestehen daraus, wobei der Thermoplast oder das thermoplastische Elastomere als mindestens eine Komponente eine Legierung, ein Co-, Pfropf-, Block- oder Terpolymerisat von oder mit einem Acrylnitril, Dien, Butadien, Ethylenbutylen und/oder Styrol, vorzugsweise Ethylen-Butylen-Styrol-Triblockpolymerisat (SEBS) und/oder andere Stryrolblockpolymere, Ethylen-Propylen-Dien-Pfropf- oder -copolymerisat (EPDM), vernetzten oder teilvernetztem Naturkautschuk (NR), vernetzten oder teilvernetzten Nitril-Butadien-Kautschuk (NBR) und/oder Ethylen-Propylen-Co- oder -pfropfpolymerist (EPM) enthält, wobei der Gewichtsanteil (bezogen auf 100 Gew.-% des Kunststoffes der jeweiligen Schicht oder Folie) des Polyolefins, vorzugsweise Propylenhomo-, -co-, -block- oder -pfropfpolymerisates, in der Unterfolie oder Unterschicht um mehr als 3 Gew.-%, vorzugsweise um mehr als 10 Gew.-%, höher ist als in der Oberschicht oder Oberfolie und/oder der Gewichtsanteil (bezogen auf 100 Gew.-% des Kunststoffes in der jeweiligen Folie oder Schicht) des weiteren Thermoplasten oder thermoplastischen Elastomeren in der Unterschicht um mehr als 3 Gew.-%, vorzugsweise um mehr als 7 Gew.-%, niedriger ist als in der Oberschicht.

Nach einer zweckmäßigen Ausführungsform enthalten die Kunststoffmischung oder -legierung der Oberschicht oder Oberfolie und Unterschicht oder Unterfolie ein Polystyrol (PS), Polyamid (PA), Styrol-Acrylnitril-Co- oder -Pfropfpolymerisat (SAN), Acrylnitril-Butadien-Styrol-Co- oder -Pfropfpolymerisat (ABS) und/oder Acrylsäureester-Styrol-Acrylnitril-Co- oder -Pfropfpolymerisat (ASA) (Hartphase) und mindestens einen weiteren Thermoplasten oder ein thermoplastisches Elastomer mit einer niedrigeren Fließtemperatur oder niedrigerem Fließtemperaturbereich, Kristallitschmelztemperatur oder Kristallitschmelztemperaturbereich oder einem höheren Schmelzindex (Weichphase) oder bestehen daraus, wobei der Thermoplast oder thermoplastische Elastomer als mindestens eine Komponente eine Legierung, ein Co-, Pfropf-, Block- oder Terpolymerisat minestens einer der folgenden Verbindungen: Alken oder Alkenyl (C₁ - C₄) - Alkyl (C₁ - C₈)-Acrylat-Kohlenmonoxid-Terpolymerisat, Alken oder Alkenyl (C₁ - C₄)-Alkyl (C₁ - C₈)-Methacrylat-Kohlenmonoxid-Terpolymerisat, Alken oder Alkenyl (C₁ - C₄)-Alkyl (C₁ - C₈)-Acrylat-Copolymerisat, Alken oder Alkenyl (C₁ - C₄)-Alkyl (C₁ - C₈)-Methacrylat-Copolymerisat, mit einem Alkyl-Acrylat-Gehalt oder Alkyl-Methacrylat-Gehalt von mehr als 12 Gew.-% (berechnet auf das jeweilige polare Gruppen enthaltende Plastifiziermittel mit 100 Gew.-Teilen) und mit statistisch verteilten Acrylat- oder Methacrylatgruppen bzw. Alkylacrylat- oder Alkylmethacrylatgruppen, vorzugsweise Ethylen-Butylacrylat-Kohlenmonoxid-Terpolymerisat, Ethylen-Hexylacrylat-Kohlenmonoxid-Terpolymerisat, Ethylen-Butylacrylat-Copolymerisat, Ethylen-Hexylacrylat-Copolymersat, Ethylen-Vinylacetat-Copolymerisat und/oder Ethylen-Vinylacetat-Kohlenmonoxid-Terpolymerisat und/oder Ethylen-Propylen-Dien-Co- oder -pfropfpolymerisat (EPDM), Ethylen-Propylen-Co- oder -pfropfpolymerisat (EPM), vernetzter oder teilvernetzter Naturkautschuk (NR), vernetzter und/oder teilvernetzter Nitril-Butadien-Kautschuk (NBR) und/oder thermoplastisches Polyurethan oder thermoplastischen Polyetherester enthält oder daraus besteht, wobei der Gewichtsanteil (bezogen auf 100 Gew.-% der Kunststoffe der jeweiligen Schicht oder Folie) der Hartphase einschließlich des Acrylnitril-Butadien-Styrol-Co- oder -pfropfpolymerisat (ABS) in der Unterfolie oder Unterschicht um mehr als 3 Gew.-%, vorzugsweise um mehr als 7 Gew.-%, höher ist als in der Oberschicht oder Oberfolie und/oder der Gewichtsanteil (bezogen auf 100 Gew.-% des Kunststoffes in der jeweiligen Folie oder Schicht) des weiteren Thermoplasten oder thermoplastischen Elastomeren in der Unterfolie oder Unterschicht um mehr als 3 Gew.-%, vorzugsweise um mehr als 7 Gew.-%, niedriger ist als in der Oberschicht oder Oberfolie.

Nach einer weiteren Ausführungsform des erfindungsgemäßen Kunststoffextrudates für das Extrusions-Gießverfahren enthält die Kunststoffmischung oder -legierung der Oberschicht oder Oberfolie und Unterschicht oder Unterfolie ein Polyurethan und/oder Polyetherester oder besteht daraus, wobei das Polyurethan und/oder der Polyetherester der Oberfolie oder Oberschicht eine Shore-D-Härte von 25 bis 50 aufweist oder durch Modifiziermittel darauf eingestellt ist und das Polyurethan und/oder der Polyetherester der Unterfolie oder Unterschicht eine Shore-D-Härte von 35 bis 70 aufweist und um mindestens 5, vorzugsweise 10, Shore-D-Härtegrade höher liegt als die Shore-D-Härte der D-Härtegrade höher liegt als die Shore-D-Härte der Oberfolie oder Oberschicht oder durch ein Modifiziermittel oder Modifiziermittelgemisch darauf eingestellt ist.

Nach einer anderen Ausführungsform bestehen sowohl die Oberschicht als auch die Unterschicht des Extrudates aus mindestens einem, vorzugsweise mindestens zwei verschiedenen Kunststoffen und weisen qualitativ und quantitativ unterschiedliche Zusammensetzungen auf.

Die Erfindung betrifft weiterhin die Verwendung der nach dem Negativtiefziehverfahren hergestellten Formteile oder Gegenstände, vorzugsweise der mit einer Schaumschicht an der Unterschicht oder Unterfolie und/oder einem Träger versehenen geformten Kunststofformteile oder -gegenstände, für Kraftfahrzeuginnenverkleidungen und Kraftfahrzeugteile, vorzugsweise für Schalttafeln, Konsolen, Seitenwände, Türpfosten und/oder Säulenverkleidungen.

### Zeichnungsbeschreibung

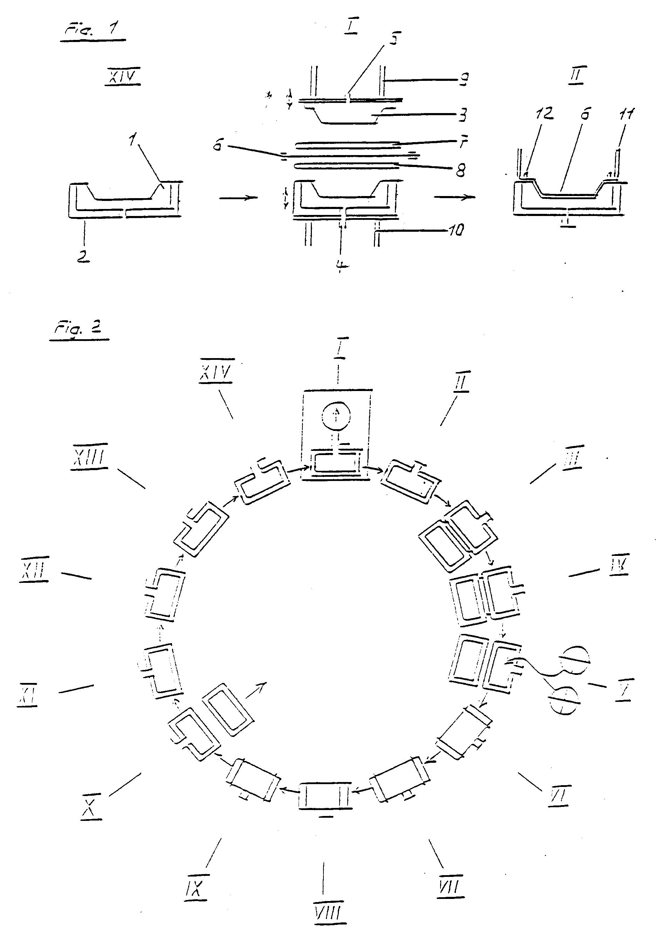

In der Figur 1 ist ein Ausführungsbeispiel des erfindungsgemäßen Verfahrens und der erfindungsgemäßen Vorrichtung schematisch dargestellt.

Dabei sind in Figur 1 die Negativtiefziehform (1) in der Haltevorrichtung (2) sowie in eine Anschlußvorrichtung zum Anlegen von Druck oder Unterdruck schematisch wiedergegeben.

Aus dem Breitschlitzextruder 4 tritt das flächenförmige Kunststoffextrudat in die ständig während des Eingießens unter Vakuum oder Unterdruck stehende Negativform oder Negativtiefziehform ein. Die Negativtiefziehform und/oder der Extruder werden in mindestens einer Richtung bewegt. Im vorliegenden Fall wurde die Negativtiefziehform einem Bewegungsvorgang unterworfen. Die bahnförmige Schmelze wird auf den Rand oder Rahmen der porösen Negativform oder Negativtiefziehform aufgebracht (Arbeitsstufe Ia). Dabei bewegt sich die Negativtiefziehform weiter, wobei die Oberfläche der Negativtiefziehform in den Stufen (Ib) und (Ic) von dem Extrudat bedeckt wird. Der Bewegungsvorgang wird abgeschlossen, wenn der andere Seitenrand der Negativtiefziehform und/oder der Unterdruckkammer erreicht ist.

In Figur 2 wird die ein- oder zweischichtige, aus einem Extruder 4 austretende Schmelzenbahn 5 ohne zusätzliche Heizvorrichtung unter Ausnützung der Wärmekapazität der Schmelzenbahn auf den Rand der Negativziehform aufgebracht (I A). Die Negativtiefziehform wird ständig während des Eingießens unter Vakuum oder Unterdruck gehalten. Durch Bewegung der Negativtiefziehform wird die Schmelzenbahn über und in die Negativform gebracht (I B). Der Bewegungsvorgang der Negativform ist damit abgeschlossen (I C). Die aus- und/oder eingegossene Schmelzenbahn wird über den allseitig umlaufenden porösen, luftdurchlässigen Rahmen oder Rand der Negativtiefziehform abgedichtet und gleichzeitig in der Negativtiefziehform verformt (II).

In Figur 3 ist ein kontinuierliches Verfahren in Form einer ketten- oder karusellartigen Anordnung dargestellt. Die Arbeitsstufe I zeigt das aus einem Extruder (4) austretende Extrudat (5), das ohne zusätzliche Heizvorrichtung unter Ausnutzung der Wärmekapazität des Extrudates oder der Schmelzenbahn auf den Rand der Negativtiefziehform (1) aufgebracht wird. Durch Bewegung der Negativtiefziehform wird die Schmelzenbahn in die Negativtiefziehform gebracht und gegebenenfalls mittels eines Rahmens abgedichtet. Danach wird ein Unterdruck an die Negativtiefziehform angelegt und negativtiefgezogen. Gemäß Arbeitsstuffe III wird ein Träger eingebracht und in die Arbeitsstufe IV mit einem Schaumreaktionsgemisch versehen und nachträglich der an die Form angebrachte Schäumformdeckel geschlossen. Die Arbeitsgänge V und VI dienen der Ausschäumung oder Reaktion des Schaumreaktionsgemisches. In der Arbeitsstufe VII erfolgt die Öffnung des Schäumformdeckels. Die hinterschäumte Kunststoffolienbahn wird an ihren Rändern bei der Arbeitsstufe VIII abgestanzt und das hinterschäumte Formteil entnommen (Arbeitsstufe IX).

## Patentansprüche

1. Verfahren zur Herstellung von Formteilen oder Gegenständen unter Verwendung eines Extrusionsgießverfahrens, wobei das aus einem Breitschlitzextruder austretende schmelzenförmige ein- oder mehrschichtige Kunststoffextrudat in eine ständig während des Eingießens unter Vakuum stehende Form eingebracht wird, dabei die vorgelegte Form oder Formoberfläche annimmt, wobei der Breitschlitzextruder und/oder die Form in mindestens einer Richtung bewegt werden und die mittlere Dicke des Extrudates in der Negativ- oder Negativtiefziehform unter 7000 »m eingestellt wird, dadurch gekennzeichnet, daß ein Breitschlitzextruder verwendet wird, der hinsichtlich der ausgestoßenen Menge des Kunststoffextrudates diskontinuierlich oder intermittierend arbeitet, wobei die ausgestoßene Menge des Kunststoffextrudates während der Zeit des Tiefziehvorganges auf Null oder eine geringere Ausstoßmenge eingestellt wird, wobei eine Düse des Breitschlitzextruders Verwendung findet, die eine, während des Aufbringens der Schmelze verstell- und steuerbare Vorrichtung zur Einstellung der Distanz der Düsenlippen aufweist, wodurch Hinterschneidungen oder andere ungleichmäßig geformte Gegenstände oder Formteile annähernd gleichmäßig beschichtet oder Materialanhäufungen an vorbestimmten Stellen vermieden werden, daß das Kunststoffextrudat in Form einer bahnenförmigen Schmelze auf einen allseitig umlaufenden porösen, luftdurchlässigen Rahmen oder Rand der Negativ- oder Negativtiefziehform aufgebracht wird, daß die Negativform oder Negativtiefziehform vor dem Eingießen auf eine Temperatur unter 373 K eingestellt wird und das Extrudat die poröse, luftdurchlässige, genarbte, strukturierte, geformte und/oder mit Oberflächendekorationen versehene Form der Negativform oder Negativtiefziehform annimmt und sofort um mehr als 80 K gekühlt oder schockgekühlt wird.

2. Verfahren nach Anspruch 1, dadurch gekennzeichnet, daß die Negativform oder Negativtiefziehform vor dem Eingießen auf eine Temperatur unter 333 K eingestellt wird, daß das Kunststoffextrudat in Form einer bahnenförmigen Schmelze während und/oder bei der Berührung des Rahmens oder Randes und/oder allseitig umlaufenden Randes der porösen Formoberfläche der Negativform oder Negativtiefziehform auch vom allseitig umlaufenden Rand angesaugt wird und eine Schockkühlung um mehr als 140 K durchgeführt wird.

3. Verfahren nach Ansprüchen 1 und 2, dadurch gekennzeichnet, daß das aus dem Breitschlitzextruder austretende schmelzenförmige, ein- oder mehrschichtige Kunststoffextrudat unmittelbar vor und/oder während der Verformung in der Negativform oder Negativtiefziehform im oder oberhalb der Fließtemperatur oder Fließtemperaturbereich, Kristallitschmelztemperatur oder Schmelztemperatur liegt und deren Verformungstemperatur 2 bis 80 K, vorzugsweise 5 bis 40 K, niedriger liegt als die Extrusionstemperatur.

4. Verfahren nach einem oder mehreren der Ansprüche 1 bis 3, dadurch gekennzeichnet, daß die aus dem Breitschlitzextruder austretende schmelzenförmige Bahn oder Kunststoffextrudat einen teilkristallinen Anteil im Thermoplasten enthält, wobei die Temperatureinstellung unmittelbar vor der Verformung im Negativtiefziehwerkzeug, im oder oberhalb des Kristallitschmelzbereich, vorzugsweise im thermoplastischen Bereich erfolgt.

5. Verfahren nach einem oder mehreren der Ansprüche 1 bis 3, dadurch gekennzeichnet, daß die aus dem Extruder, vorzugsweise Breitschlitzextruder austretende schmelzenförmige Bahn oder Kunststoffextrudat einen amorphen Anteil enthält, wobei die Temperatureinstellung unmittelbar vor der Verformung im Negativtiefziehwerkzeug, vorzugsweise im oder oberhalb des Fließtemperaturbereiches oder im thermoplastischen Bereich erfolgt.

6. Verfahren nach einem oder mehreren der Ansprüche 1 bis 5, dadurch gekennzeichnet, daß nach dem Eingießen des Extrudates in die Negativform oder Negativtiefziehform ein Träger, vorzugsweise ein positiv geformter Träger, auf die noch heiße eingegossene Schmelze von der nicht zu dekorierenden oder nicht zu prägenden Rückseite her aufgebracht und/oder durch Verwendung eines Druckes, vorzugsweise eines gleichmäßigen Druckes, auf die Trägerrückseite eine Verformung der Schmelzbahnrückseite unter Verbindung des Trägers erfolgt.

7. Vorrichtung zur Herstellung von Formteilen oder Gegenständen nach dem Gießverfahren, bestehend aus mindestens einer Gießform und mindestens einen Breitschlitzextruder, wobei der Breitschlitzextruder und/oder die Form in mindestens einer Richtung bewegbar angeordnet sind, daß die Form porös und luftdurchlässig ist, dadurch gekennzeichnet, daß die poröse oder mikroporöse Negativform oder Negativtiefziehform auch an dem allseitig umlaufenden Rand oder Rahmen eine poröse, luftdurchlässige oder mikroporöse, luftdurchlässige Oberfläche besitzt und die Düse des Breitschlitzextruders eine während des Aufbringens der Schmelze verstell- und steuerbare Vorrichtung zur Einstellung der Distanz der Düsenlippen aufweist und/oder, daß die Negativform oder Negativtiefziehform und/oder der Extruder mit einer steuerbaren Vorrichtung zur Einstellung der Bewegungsgeschwindigkeiten versehen sind.

8. Vorrichtung nach Anspruch 7, dadurch gekennzeichnet, daß der Extruder mit einer Vorrichtung zur Steuerung der Schneckendrehzahl ausgestattet ist.

9. Vorrichtung nach Ansprüchen 7 und 8, dadurch gekennzeichnet, daß die Negativform oder Negativtiefziehform in der Nähe ihrer Formoberfläche mit einer Kühlvorrichtung oder einem Kühlsystem versehen ist.

## Claims

1. A method for producing shaped parts or articles using an extrusion-casting process, in which the one-layer or multi-layer plastics extrudate in melt form, which emerges from a slot extruder is introduced into a mould which is continuously under vacuum during pouring-in, in so doing adopts the shape or shaped surface provided, with the slot extruder and/or the mould being moved in at least one direction and the average thickness of the extrudate in the negative mould or negative thermoforming mould being set to less than 7000 »m, characterised in that a slot extruder is used which operates discontinuously or intermittently with respect to the quantity of plastics extrudate ejected, with the quantity of the plastics extrudate ejected being set to zero or to a smaller ejection quantity during the time of the negative thermoforming operation, with a nozzle of the slot extruder being used which has a device for setting the distance of the nozzle lips which is adjustable and controllable during the application of the melt, which causes undercuts or other irregularly shaped objects or shaped parts to be approximately uniformly coated or piling-up of material at predetermined points to be avoided, that the plastics extrudate is applied in the form of a web-like melt to a porous, air-permeable frame or edge of the negative mould or negative thermoforming mould which runs round on all sides, that the negative mould or negative thermoforming mould is set to a temperature below 373 K before pouring-in and the extrudate assumes the porous, air-permeable, grained, textured or shaped form, and/or the form provided with surface decorations, of the negative mould or negative thermoforming mould and is immediately cooled or shock-cooled by more than 80 K.

2. A method according to Claim 1, characterised in that the negative mould or negative thermoforming mould before pouring-in is set to a temperature below 333 K, that the plastics extrudate in the form of a web-like melt during and/or upon the contact of the frame or edge, and/or edge which runs round on all sides, of the porous mould surface of the negative mould or negative thermoforming mould is also drawn in by suction from the edge which runs round on all sides and shock-cooling by more than 140 K is effected.

3. A method according to Claims 1 and 2, characterised in that the one-layer or multi-layer melt-like plastics extrudate emerging from the slot extruder immediately before and/or during the deformation in the negative mould or negative thermoforming mould lies at or above the flow temperature or flow temperature range, crystallite melting temperature or melting temperature and the shaping temperature there of is 2 to 80 K, preferably 5 to 40 K, lower than the extrusion temperature.

4. A method according to one or more of Claims 1 to 3, characterised in that the melt-like web or plastics extrudate emerging from the slot extruder has a partly crystalline content in the thermoplastic, with the setting of the temperature taking place immediately before the deformation in the negative thermoforming mould, in or above the crystallite melting range, preferably in the thermoplastic range.

5. A method according to one or more of Claims 1 to 3, characterised in that the melt-like web or plastics extrudate emerging from the extruder, preferably slot extruder, has an amorphous content, with the setting of the temperature taking place immediately before the deformation in the negative thermoforming mould, preferably in or above the flow temperature range or in the thermoplastic range.

6. A method according to one or more of Claims 1 to 5, characterised in that after the pouring of the extrudate into the negative mould or negative thermoforming mould a support, preferably a positively-shaped support, is applied to the still-hot poured-in melt from the rear side which is not to be decorated or grained and/or deformation of the rear side of the melt web by using a pressure, preferably a uniform pressure, is effected on the rear side of the support, joining the support.

7. An apparatus for producing shaped parts or articles according to the casting process, consisting of at least one casting mould and at least one slot extruder, with the slot extruder and/or the mould being arranged to be movable in at least one direction, that the mould is porous and air-permeable, characterised in that the porous or microporous negative mould or negative thermoforming mould also has a porous, air-permeable, or microporous, air-permeable, surface on the edge or frame which runs round on all sides, and the nozzle of the slot extruder has a means which is adjustable and controllable during the application of the melt for setting the distance between the nozzle lips and/or that the negative mould or negative thermoforming mould and/or the extruder are provided with a controllable means for setting the speeds of movement.

8. An apparatus according to Claim 7, characterised in that the extruder is equipped with an apparatus for controlling the speed of rotation of the screw.

9. An apparatus according to Claims 7 and 8, characterised in that the negative mould or negative thermoforming mould is provided with a cooling means or a cooling system in the vicinity of its mould surface.

## Revendications

1. Procédé pour la fabrication d'éléments de moulage ou d'objets en utilisant un procédé de moulage par extrusion dans lequel l'extrudat de matière synthétique à une ou plusieurs couches, sous forme d'une masse fondue s'échappant d'une extrudeuse à fente large, est introduit dans un moule maintenu constamment sous vide au cours du versage, en l'occurrence, épouse la forme préétablie du moule ou de la surface de moulage, dans lequel l'extrudeuse à fente large et/ou le moule se déplacent dans au moins une direction et l'épaisseur moyenne du produit d'extrusion dans le moule négatif ou dans le moule d'emboutissage négatif est réglée à moins de 7000 »m, caractérisé en ce qu'on utilise une extrudeuse à fente large qui travaille en discontinu ou par intermittence en ce qui concerne la quantité éjectée du produit d'extrusion en matière synthétique, dans lequel la quantité de l'extrudat de matière synthétique éjectée pendant le laps de temps que dure le processus d'emboutissage est réglée à zéro ou à une quantité d'éjection réduite, dans lequel on utilise une filière de l'extrudeuse à fente large présentant un dispositif qui peut être réglé et commandé lors de l'application de la masse fondue, pour régler la distance séparant les lèvres de la filière, de façon à appliquer un revêtement de manière approximativement uniforme sur des contre-dépouilles ou encore sur d'autres objets ou éléments de moulage moulés de manière non uniforme, ou à éviter des accumulations de matière à des endroits prédéterminés; en ce que l'extrudat de matière synthétique est appliqué sous la forme d'une masse fondue en forme de bande sur un cadre ou sur un bord du moule négatif ou du moule d'emboutissage négatif, poreux, perméable à l'air et qui s'étend sur tous les côtés; en ce que le moule négatif ou le moule d'emboutissage négatif est réglé avant le versage à une température inférieure à 373 K et en ce que l'extrudat épouse la forme de la surface de moulage poreuse, perméable à l'air, grainée, texturée, façonnée et/ou munie de décorations superficielles du moule négatif ou du moule d'emboutissage négatif, et est immédiatement refroidi ou refroidi par choc de plus de 80 K.

2. Procédé selon la revendication 1, caractérisé en ce que le moule négatif ou le moule d'emboutissage négatif est réglé avant le versage à une température inférieure à 333 K, en ce que l'extrudat de matière synthétique sous forme d'une masse fondue en forme de bande, pendant et/ou lors de sa mise en contact avec le cadre ou le bord et/ou le bord s'étendant sur tous les côtés de la surface de moulage poreuse du moule négatif ou du moule d'emboutissage négatif, est également aspiré par le bord s'étendant sur tous les côtés, et en ce qu'on procède à un refroidissement par choc de plus de 140 K.

3. Procédé selon les revendications 1 et 2, caractérisé en ce que l'extrudat de matière synthétique à une ou plusieurs couches, sous forme d'une masse fondue s'échappant de l'extrudeuse à fente large, immédiatement avant et/ou pendant la déformation dans le moule négatif ou dans le moule d'emboutissage négatif, se situe à la température de fluage ou dans la plage de température de fluage, à la température de fusion du cristallite ou encore à la température de fusion, ou bien au-dessus de ces dernières, sa température de formage se situant de 2 à 80 K, de préférence de 5 à 40 K en dessous de la température d'extrusion.

4. Procédé selon une ou plusieurs des revendications 1 à 3, caractérisé en ce que l'extrudat de matière synthétique ou la bande en forme de masse fondue s'échappant de l'extrudeuse à fente large contiennent une fraction partiellement cristalline de matières thermoplastiques, et dans lequel le réglage de la température a lieu immédiatement avant la déformation dans l'outil d'emboutissage négatif, dans ou au-dessus du domaine de fusion du cristallite, de préférence dans la plage thermoplastique.

5. Procédé selon une ou plusieurs des revendications 1 à 3, caractérisé en ce que l'extrudat de matière synthétique ou la bande en forme de masse fondue s'échappant de l'extrudeuse, de préférence de l'extrudeuse à fente large, contient une fraction amorphe, et dans lequel le réglage de la température a lieu immédiatement avant la déformation dans l'outil d'emboutissage négatif, de préférence dans ou au-dessus de la plage de température de fluage ou encore dans la plage thermoplastique.

6. Procédé selon une ou plusieurs des revendications 1 à 5, caractérisé en ce que, après le versage de l'extrudat dans le moule négatif ou dans le moule d'emboutissage négatif, on applique un support, de préférence un support positif, sur la masse fondue versée encore chaude à partir du côté envers qui ne doit pas être décoré ou qui ne doit pas être embouti et/ou en utilisant de la pression, de préférence une pression uniforme, on procède, sur le côté envers du support, à une déformation du côté envers de la bande en masse fondue en liaison avec le support.

7. Dispositif pour la fabrication d'éléments moulés ou d'objets conformément au procédé de coulée, constitué par au moins un moule de coulée et par au moins une extrudeuse à fente large, dans lequel l'extrudeuse à fente large et/ou le moule sont disposés de manière mobiles dans au moins une direction, et le moule est poreux et perméable à l'air, caractérisé en ce que le moule négatif ou le moule d'emboutissage négatif poreux ou microporeux possède également, contre le bord ou contre le cadre s'étendant sur tous les côtés, une surface poreuse perméable à l'air ou microporeuse perméable à l'air, et la filière de l'extrudeuse à fente large présente un dispositif qui peut être réglé et commandé au cours de l'application de la masse fondue pour régler la distance séparant les lèvres de la filière et/ou en ce que le moule négatif ou le moule d'emboutissage négatif et/ou l'extrudeuse sont munis d'un dispositif apte à être commandé pour le réglage des vitesses de déplacement.

8. Dispositif selon la revendication 7, caractérisé en ce que l'extrudeuse est équipée d'un dispositif pour la commande de la vitesse de rotation de la vis.

9. Dispositif selon les revendications 7 et 8, caractérisé en ce que le moule négatif ou le moule d'emboutissage négatif est muni, à proximité de sa surface de moulage, d'un dispositif de refroidissement ou d'un système de refroidissement.
